(19) Europäisches Patentamt
European Patent Office
Office européen des brevets

(11) **EP 2 345 694 B1**

(12) **EUROPEAN PATENT SPECIFICATION**

(45) Date of publication and mention
of the grant of the patent:
**25.01.2017 Bulletin 2017/04**

(21) Application number: **10176278.9**

(22) Date of filing: **10.09.2010**

(51) Int Cl.:
*C08K 5/17* *(2006.01)*      *C08K 5/053* *(2006.01)*
*C08J 5/24* *(2006.01)*      *C08G 63/685* *(2006.01)*
*C08G 63/78* *(2006.01)*      *C08F 8/00* *(2006.01)*
*C08F 8/32* *(2006.01)*      *C08L 35/00* *(2006.01)*
*D04H 1/488* *(2012.01)*      *D04H 1/587* *(2012.01)*
*D06M 15/263* *(2006.01)*      *D06M 15/285* *(2006.01)*
*C08L 23/02* *(2006.01)*

(54) **CURABLE AQUEOUS COMPOSITION**

HÄRTBARE WÄSSRIGE ZUSAMMENSETZUNG

COMPOSITION AQUEUSE DURCISSABLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **21.10.2009 CN 200910197510**

(43) Date of publication of application:
**20.07.2011 Bulletin 2011/29**

(73) Proprietor: **Rohm and Haas Company
Philadelphia, PA 19106-2399 (US)**

(72) Inventors:
• **Haigh, John**
**06330 Roquefort Les Pins (FR)**
• **Egraz, Thierry**
**06560 Valbonne (FR)**
• **Morino-Feraud, Lilyane**
**06220 Vallauris (FR)**
• **Mao, Zhiqiang (Steven)**
**Shanghai (CN)**
• **Yang, Miao**
**201210 Shanghai (CN)**

(74) Representative: **Houghton, Mark Phillip et al
Patent Outsourcing Limited
1 King Street
Bakewell, Derbyshire DE45 1DZ (GB)**

(56) References cited:
**WO-A1-2007/149644     US-A- 5 451 432
US-A1- 2008 009 209**

**Description**

This invention relates to a curable aqueous composition, a method for forming a treated substrate using the curable aqueous composition, and the substrate so treated. The curable aqueous composition includes: an emulsion polymer including, as copolymerized units, from 0.5 to 9% ethylenically-unsaturated dicarboxylic acid monomer by weight, based on the weight of the emulsion polymer; and a polyol in the amount of from 0.5 to 15%, by weight, based on the weight of the emulsion polymer, wherein the curable aqueous composition includes carboxylic acid-containing polymer including, as polymerized units, from 0.5 to 9% carboxylic acid monomer by weight, based on the total weight of all carboxylic acid-containing polymer.

U.S. Patent No. 5,451,432 discloses a method for treating a flexible, porous substrate with a water-borne formaldehyde-free composition, the composition containing certain copolymerized ethylenically-unsaturated dicarboxylic acids, or derivatives thereof, wherein the binder is partially neutralized with a fixed base.

WO2007/149644 discloses a method for treating fibrous products with a formaldehyde free binder composition which comprises a polyol and an emulsion polymer having copolymerized units of ethylenically-unsaturated dicarboxylic acid monomer. Improved properties of the treated substrates are still desired. It has been found that aqueous compositions including certain emulsion polymers including copolymerized ethylenically-unsaturated dicarboxylic acid monomer; and certain polyols, particularly alkanolamines, limited in total polymerized carboxylic acid content provide desired benefits while maintaining substantially formaldehyde-free compositions and processes employing them.

In a first aspect of the present invention, there is provided a curable aqueous composition consisting of an emulsion polymer comprising, as copolymerized units, from 0.5 to 9% ethylenically-unsaturated dicarboxylic acid monomer by weight, based on the weight of said emulsion polymer;

a polyol in the amount of from 0.5 to 15%, by weight, based on the weight of said emulsion polymer;

and optionally a phosphorous-containing species;

wherein said aqueous composition comprises as the total of all carboxylic acid-containing polymer, as polymerized units, from 0.5 to 9% carboxylic acid monomer by weight, based on the weight of said emulsion polymer.

In a second aspect of the present invention, there is provided a method for forming a substrate consisting of

    a) forming a curable aqueous composition comprising: an emulsion polymer comprising, as copolymerized units, from 0.5 to 9% ethylenically-unsaturated dicarboxylic acid monomer by weight, based on the weight of said emulsion polymer;

    a polyol in the amount of from 0.5 to 15%, by weight, based on the weight of said emulsion polymer;

    and optionally a phosphorous-containing species;

    wherein said aqueous composition comprises as the total of all carboxylic acid-containing polymer, as polymerized units, from 0.5 to 9% carboxylic acid monomer by weight, based on the weight of said emulsion polymer;

    b) contacting a flexible substrate with said curable aqueous composition; and

    c) heating said curable aqueous composition at a temperature of from 120 °C to 220 °C.

In a third aspect of the present invention, there is provided a treated substrate formed by the method of the second aspect of the present invention.

The curable aqueous composition includes an emulsion polymer; that is, a polymer prepared by the addition polymerization of ethylenically-unsaturated monomers in an aqueous emulsion polymerization process. By "aqueous composition" herein is meant a composition in which the continuous phase is water or a mixture including predominantly water but also including water-miscible solvent. A "curable composition" herein is one that undergoes a chemical process to some extent such as covalent bond formation under the agency of added energy, most typically heating. The emulsion polymer includes, as copolymerized units, from 0.5 to 9% by weight, preferably from 2 to 8% by weight, based on the weight of the emulsion polymer, ethylenically-unsaturated dicarboxylic acid monomer such as, for example, crotonic acid, itaconic acid, fumaric acid, maleic acid, including their anhydrides, salts, and mixtures thereof. Preferred is itaconic acid.

The emulsion polymer includes, in addition to dicarboxylic acid monomer, at least one other copolymerized ethylenically unsaturated monomer such as, for example, a (meth)acrylic ester monomer including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, ureido-functional (meth)acrylates and acetoacetates, acetamides or cyanoacetates of (meth)acrylic acid; styrene or substituted styrenes; vinyl toluene; butadiene; vinyl acetate or other vinyl esters; vinyl monomers such as vinyl chloride, vinylidene chloride, N-vinyl pyrollidone; and (meth)acrylonitrile The use of the term "(meth)" followed by another term such as (meth)acrylate or (meth)acrylamide, as used throughout the disclosure, refers to both acrylates and methacrylates or acrylamides and methacrylamides, respectively. Preferably, monomers which may generate formaldehyde on polymerization or during subsequent processing such as, for example, N-alkylol (meth)acrylamide are excluded. In certain embodiments, the emulsion polymer includes from 0 to 5 wt%, or in the alternative, from 0 to 0.1wt%, based on the weight of the polymer, of a copolymerized multi-ethylenically unsaturated monomer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The emulsion polymer may include a copolymerized monoethylenically-unsaturated mono-carboxylic acid monomer. Monocarboxylic acid monomers include, for example, (meth)acrylic acid; and monoalkyl esters of itaconic acid, fumaric acid, and maleic acid.

Mixtures of emulsion polymers having different compositions are also contemplated. For a mixture of two or more emulsion polymers, the copolymerized dicarboxylic acid monomer content shall be determined from the overall composition of the emulsion polymers without regard for the number of emulsion polymers therein

The emulsion polymerization techniques used to prepare the aqueous emulsion polymer are well known in the art such as, for example, as disclosed in U.S. Patents No. 4,325,856; 4,654,397; and 4,814,373. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymers. The monomer mixture may be added neat or as an emulsion in water. The monomer mixture may be added in a single addition or in multiple additions or continuously over the reaction period using a uniform or varying composition. Additional ingredients such as, for example, free radical initiators, oxidants, reducing agents, chain transfer agents, neutralizers, surfactants, and dispersants may be added prior to, during, or subsequent to any of the stages. Processes yielding polymodal particle size distributions such as those disclosed in US Patent Nos. 4,384,056 and 4,539,361, for example, may be employed.

In another embodiment of the present invention, the aqueous emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain monomers, surfactants, chain transfer agents, etc. selected from those disclosed hereinabove for the emulsion polymer. For a multi-staged emulsion polymer, the copolymerized dicarboxylic acid monomer content shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373.

The calculated glass transition temperature ("Tg") of the emulsion polymer is typically from -65°C to 65°C, or in the alternative, from -55°C to 20°C. Tgs of the polymers herein are those calculated using the Fox equation (T.G. Fox, Bull. Am. Physics Soc., Volume 1, Issue No. 3, page 123(1956)). That is, for calculating the Tg of a copolymer of monomers M1 and M2,

$$1/\text{Tg(calc.)}= \text{w(M1)}/\text{Tg(M1)} + \text{w(M2)}/\text{Tg(M2)} \, ,$$

wherein:

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,

all temperatures being in °K.

The glass transition temperature of homopolymers may be found, for example, in "Polymer Handbook", edited by J. Brandrup and E.H. Immergut, Interscience Publishers.

The average particle diameter of the emulsion polymer particles is typically from 30 nanometers to 500 nanometers, preferably from 60 nanometers to150 nanometers as measured by a Brookhaven Model BI-90 Particle Sizer supplied by Brookhaven Instrument Corp., Holtsville, NY.

The curable aqueous composition includes a polyol in the amount of from 0.5 to 15%, by weight, based on the weight of the emulsion polymer. By polyol herein is meant a molecule bearing at least two hydroxyl groups. The polyol may be a compound with a molecular weight less than 1000 bearing at least two hydroxyl groups such as, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, and triethanolamine. Preferred polyols include compounds with a molecular weight less than 1000 bearing at least two hydroxyl groups. More preferred polyols include compounds with a molecular weight less than 1000 bearing at least two hydroxyl groups and at least one amino group such as, for example, diethanolamine and triethanolamine. In certain embodiments the polyol may be an addition polymer having a Mn of 1000 or greater containing at least two hydroxyl groups such as, for example, polyvinyl alcohol, partially hydrolyzed polyvinyl acetate, and homopolymers or copolymers of hydroxyethyl (meth)acrylate or hydroxypropyl (meth)acrylate. Preferred addition polymer polyols include, as copolymerized units, allyl alcohol or 3-allyloxy-1,2-propanediol.

The curable aqueous composition of the present invention includes carboxylic acid-containing polymer including, as polymerized units, from 0.5 to 9% carboxylic acid monomer by weight, based on the total weight of carboxylic acid-containing polymer. That is, the curable aqueous composition may optionally include one or more aqueous emulsion polymers in addition to the emulsion polymer including, as copolymerized units, from 0.5 to 9% ethylenically-unsaturated dicarboxylic acid monomer by weight, based on the weight of the emulsion polymer, independently optionally one or more or polymers dispersed in an aqueous medium, and independently optionally one or more polymers soluble in the aqueous medium of the curable aqueous composition. Such polymers may include oligomeric compositions having a molecular weight of greater than 500. In any event the curable aqueous composition includes in the total of all carboxylic acid-containing polymers, as polymerized units, from 0.5 to 9% carboxylic acid monomer, by weight, based on the total weight of carboxylic acid-containing polymer, carboxylic acid-containing monomer, including monomers containing any number of carboxylic acid groups from 1 to 100.

In certain embodiments the curable aqueous composition can include a Phosphorous-containing species which can be a Phosphorous-containing compound such as, for example, an alkali metal hypophosphite salt, an alkali metal phosphite, an alkali metal polyphosphate, an alkali metal dihydrogen phosphate, a polyphosphoric acid, and an alkyl phosphinic acid or it can be an oligomer or polymer bearing Phosphorous-containing groups such as, for example, an addition polymer of acrylic and/or maleic acid formed in the presence of sodium hypophosphite, addition polymers such as, for example, a polymer prepared from ethylenically unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts. The phosphorous-containing species can be used at a level of from 0% to 40%, preferably from 0% to 5%, further preferably from 0% to 2.5%, more preferably from 0% to 1%, and further more preferably from 0% to 0.5% by weight based on the weight of the polymer of the present invention.

The curable aqueous composition of the present invention is preferably a formaldehyde-free curable composition. By "formaldehyde-free composition" herein is meant that the composition is substantially free from formaldehyde, nor does it liberate substantial formaldehyde as a result of drying and/or curing. In order to minimize the formaldehyde content of the curable composition it is preferred, when preparing the emulsion polymer of the present invention, to use polymerization adjuncts such as, for example, initiators, reducing agents, chain transfer agents, biocides, surfactants, and the like, which are themselves free from formaldehyde, do not generate formaldehyde during the polymerization process, and do not generate or emit formaldehyde during the treatment of a substrate. When low levels of formaldehyde are acceptable in the waterborne composition or when compelling reasons exist for using adjuncts which generate or emit formaldehyde, such compositions can be used.

The curable aqueous composition may contain, in addition, conventional treatment components such as, for example, emulsifiers, pigments, fillers or extenders, anti-migration aids, curing agents, coalescents, surfactants, biocides, plasticizers, organosilanes, anti-foaming agents, corrosion inhibitors, colorants, waxes, other polymers not of the present invention, and anti-oxidants.

In one aspect of the present invention a method for forming a treated substrate is provided including a) forming the curable aqueous composition of the present invention; b) contacting a flexible substrate with the curable aqueous composition; and c) heating the curable aqueous composition at a temperature of from 120 to 220°C. The flexible substrate includes paper; leather; woven or nonwoven fabrics; felts and mats or other assemblies of fibers, and fibers. Substrates including fibers may include cotton, synthetic fibers such as, for example, polyester and rayon, glass, mixtures thereof, and the like. The flexible substrate is contacted with the curable aqueous composition using conventional application techniques such as, for example, air or airless spraying, padding, saturating, roll coating, curtain coating, printing, and the like. Heating the curable aqueous composition at a temperature of from 120 to 220°C, preferably from 150 to 180°C, for a time sufficient to achieve an acceptable level of cure such as, for example, for a time of from 1 minute to 20 minutes, preferably from 2 minutes to 10 minutes is effected. The drying and curing functions can be effected in two or more distinct steps, if desired. For example, the composition can be first heated at a temperature and for a time sufficient to substantially dry but not to substantially cure the composition and then heated for a second time at a higher temperature and/or for a longer period of time to effect curing. Such a procedure, referred to as "B-staging", can be used to provide binder-treated nonwoven, for example, in roll form, which can at a later stage be cured, with or without forming or molding into a particular configuration, concurrent with the curing process.

Abbreviations used

pAA = poly(acrylic acid)
DEA = diethanolamine
TEA = triethanolamine
SHP = sodium hypophosphite

SAMPLE A. Preparation of Emulsion Polymer.

An emulsion polymer including, as copolymerized units, 5% itaconic acid, by weight, based on the weight of the emulsion polymer, was prepared according to the teachings of Example 1 of U.S. Patent No. 5,451,432.

EXAMPLE 1: Sample A was evaluated as a binder for a needle-punched polyester nonwoven for use in bituminous roofing membranes. For this application a key property is the Static Thermal Dimensional Stability which indicates the dimensional stability of the nonwoven as it is immersed in bitumen or when the bitumen membrane is reheated during installation. The solutions were made up as follows in the table below by simple mixing and dilution; values in grams).

The solutions were then applied to a 150 g/m2 needle-punched polyester nonwoven using a Mathis foulard to achieve an add-on of about 22-24% binder on nonwoven. The samples were then dried and cured for three minutes at 180°C in a Mathis forced air recirculation oven. Part of the samples were also exposed to a second cure of 200°C for three minutes to ensure full cure. Samples were not placed under tension during cure. The samples were then cut into 5 cm wide strips in the machine direction of manufacture and suspended for 10 minutes in an oven at 200°C with a 2 kg weight on each strip. After removal from the oven the elongation in the machine direction and contraction in the cross direction were then measured and expressed as a percentage of the original value.

Table 1.1 Preparation of Aqueous Composition

|  | % Solids | Example 1 Wet wt.(g) | Example 1 Dry wt.(g) | Comp. A Wet wt.(g) | Comp. A Dry wt.(g) |
|---|---|---|---|---|---|
| Sample A | 35.0 | 56 | 19.6 | 60 | 21 |
| Triethanolamine | 98.0 | 0.6 | 0.588 | 0 | 0 |
| SHP | 45.0 | 0.8 | 0.36 | 0 | 0 |
| Water | 0 | 110 | 0 | 110 | 0 |
|  |  |  |  |  |  |
| % Solids |  | Ex.1 -12.3 |  | Comp.A-12.4 |  |
| TEA/emulsion polymer, wt.% |  | 3.0 |  | 0 |  |

Table 1.2 Evaluation of cured aqueous composition

|  | Cure Temp. | Example 1 | Comparative Example A |
|---|---|---|---|
| Elongation, MD; % | 180 °C | 6 | 20.5 |
| Contraction, CD; % | 180 °C | 14 | 68 |
| Elongation, MD; % | 200 °C | 4.5 | 20.5 |

5

(continued)

|  | Cure Temp. | Example 1 | Comparative Example A |
|---|---|---|---|
| Contraction, CD;% | 200 °C | 6 | 64 |

The cured aqueous composition, Example 1 of the present invention, exhibits superior cure as evidenced by the reduced elongation, relative to that of Comparative Example A.

EXAMPLE 2. Pigment printing pastes were prepared as in the table below (values in wt.%). They had Brookfield viscosities of ca. 25,000 cps (LVD-4/6 rpm. The pastes were applied by screen printing on a woven cotton textile. The samples were then dried and cured at 150 °C for 3 minutes in a Mathis forced air recirculation oven. The samples were then washed and dried for three cycles. The color ($L_{ab}$ values) was measured at each cycle using a Dr. Lange Colour Pen model LMG 159. A significant color change is indicative of poor wash durability. Values are expressed as change vs. the original color.

Table 2.1 Preparation of pigment pastes including the curable aqueous composition.

|  | Comp.B | Ex. 2 |
|---|---|---|
| Water | 79.6 | 79 |
| ALCOPRINT™ PTF thickener | 1.5 | 1.5 |
| Sample A (35%) | 10.2 | 10.2 |
| TEA (85%) | 0 | 0.17 |
| SHP (50%) | 0 | 0.2 |
| Ammonia | 0.6 | 0.6 |
| RONASTAN™ TP blue (pigment paste) | 5.6 | 5.6 |

Table 2.2 Evaluation of wash durability of pigment pastes including the cured aqueous composition on cotton.

|  | Comp. B | Ex. 2 |
|---|---|---|
| Delta L - after first cycle | -0.81 | -0.73 |
| Delta L - after second cycle | 0.36 | -0.57 |
| Delta L - after third cycle | 1.96 | 0.6 |
| Delta E - after three wash cycles | 2.73 | 1.8 |

Table 2.3 Evaluation of wash durability of pigment pastes including the cured aqueous composition on a synthetic fiber textile (polyester).

|  | Comp. B | Ex. 2 |
|---|---|---|
| Delta L - after three wash cycles | 20.76 | 12.1 |
| Delta E - after three wash cycles | 27.9 | 18.2 |

The cured aqueous composition, Example 2 of the present invention, exhibits superior wash durability as evidenced by the improved color retention, relative to that of Comparative Example B.

SAMPLE B Preparation of emulsion polymer.

An emulsion polymer including, as copolymerized units, 5% itaconic acid, by weight, based on the weight of the emulsion polymer, was prepared according to the teachings of Example 1 of U.S. Patent No. 5,451,432.

EXAMPLE 3. A saturated cellulosic substrate was evaluated for water and solvent resistance. In comparative Example C an unneutralized portion of Sample B emulsion polymer was used. In Comparative Example D a portion of Sample B emulsion polymer that had been neutralized to an extent of 40% with potassium hydroxide was used. In Example 3 a portion of Sample B emulsion polymer that had been neutralized to an extent of 40% with TEA was used. The samples were then applied on Whatman #4 paper with a Mathis foulard and cured at 150 °C for 3 minutes. The samples were then tested for tensile strength in the machine direction either dry or after 10 minutes immersion in water or isopropanol.

Table 3.1 Evaluation of tensile strength of cured aqueous composition saturated on a paper substrate.

| Tensile Strength (N/cm.) | Comp. C | Comp. D | Ex. 3 |
|---|---|---|---|
| Dry | 27.4 | 35.2 | 34.3 |
| After 10 min. in water | 7.2 | 15.7 | 15.7 |
| After 10 min. in isopropanol | 2.7 | 7.6 | 18.2 |

The cured aqueous composition, Example 3 of the present invention, exhibits superior solvent resistance as evidenced by the substantially greater tensile strength after soaking in isopropanol, relative to that of Comparative Examples C or D.

EXAMPLE 4. Wash durability of the cured aqueous composition in a pigment printing application was evaluated. The formulation is given below in Table 4.1.

Table 4.1 Preparation of curable aqueous composition

|  | Comp. E | Example 4 |
|---|---|---|
| Water | 100 | 100 |
| ALCOPRINT™ PTF thickener (Huntsman Chemical) | 2.13 | 2.13 |
| Sample A (35%) | 11.5 | 11.5 |
| Water | -- | -- |
| Pentaerythritol (10%) | -- | 1.5 |
| Sodium hypophosphite(50%) | -- | 0.2 |
| Blue pigment paste | 4 | 4 |
| Brookfield Viscosity RVDV #7@10rpm(MPas) | 42,800 | 42,800 |

The formulated paste was applied on white cotton cloth by screen printing. Then the printed cloth was dried at 80°C for 3mins and cured at 150°C or 180°C for 3mins. The samples were used to test crock fastness under the weight of 1056g and 20 times. Wash durability was evaluated by washing in a washing machine at 40 °C and measuring Delta L values using a Micromatch Plus instrument (Sheen Instruments Ltd.). The results are given below.

Table 4.2 Evaluation of cured aqueous composition in a pigment printing ink on cotton

|  |  | Comp. E (150°C) | Ex. 4 (150°C) | Ex. 4 (180°C) |
|---|---|---|---|---|
| Crock fastness 0~5, 5 is the best | Dry | 3.5 | 3.5 | 4 |
|  | Wet | 4 | 4 | 4.25 |
| Wash durability (Delta L value) | First cycle | -0.55 | -0.91 | -0.51 |
|  | Third cycle | 0.94 | 0.31 | -0.04 |
|  | Fifth cycle | 1.67 | 0.85 | 0.41 |

The cured aqueous composition, Example 4 of the present invention, exhibits superior wash durability as evidenced by the improved color retention, relative to that of Comparative Example E.

EXAMPLE 5. For the preparation of Example 5 and Comparative examples F and G: To diethanolamine (DEA), water and polyacrylic acid (Mw 10,000 and solids 45%) mixed together was added Sample B emulsion polymer at 35% solids content. The polyacrylic acid (pAA) was prepared without the use of sodium hypophosphite as chain transfer agent. Quantities are given in Table 5.1.

Whatman #4 filter paper was saturated with the samples on a Werner Mathis AG calendar at a pressure of 3 bars and a speed of 3 m/s and then the samples were cured for 3 minutes at 150°C in a Werner Mathis AG oven. The add-on was 21%+/- 1.5% for the samples. The cured sheets were cut into strips 2.5 cm by 10 cm and tested for tensile strength after immersion in isopropyl alcohol for 10 minutes.

Table 5.1. Preparation of curable aqueous compositions

| Preparation | Sample B emulsion polymer | pAA | Water | DEA | Solids | Carboxylic acid monomer/ Carboxylic acid polymer | Tensile strength in alcohol |
|---|---|---|---|---|---|---|---|
| | g | g | g | g | | % | N |
| Comparative Example F | 100 | 4.45 | 95 | 1.49 | 19.2% | 10.1% | 12.5 |
| Comparative Example G | 110 | 9.35 | 95 | 1.62 | 20.5% | 14.4% | 10.2 |
| Example 5 | 100 | 0 | 95 | 1.48 | 18.6% | 5.0% | 14.5 |

The cured aqueous composition, Example 5 of the present invention, exhibits a superior value of tensile strength when exposed to isopropanol solvent that is considered indicative of improved cure and useful performance of the cured aqueous composition-treated cellulosic nonwoven relative to that of Comparative Examples F and G.

**Claims**

1. A curable aqueous composition consisting of
an emulsion polymer comprising, as copolymerized units, from 0.5 to 9% ethylenically-unsaturated dicarboxylic acid monomer by weight, based on the weight of said emulsion polymer;
a polyol in the amount of from 0.5 to 15%, by weight, based on the weight of said emulsion polymer;
and optionally a phosphorous-containing species;
wherein said aqueous composition comprises as the total of all carboxylic acid-containing polymer, as polymerized units, from 0.5 to 9% carboxylic acid monomer by weight, based on the total weight of said carboxylic acid-containing polymer.

2. The curable aqueous composition of claim 1 wherein said polyol is a hydroxylamine selected from the group consisting of diisopropanolamine, 2-(2-aminoethylamino)ethanol, triethanolamine, tris(hydroxymethyl)aminomethane, and diethanolamine.

3. A method for forming a treated substrate consisting of:

    a) forming a curable aqueous composition comprising:

        an emulsion polymer comprising, as copolymerized units, from 0.5 to 9% ethylenically-unsaturated dicarboxylic acid monomer by weight, based on the weight of said emulsion polymer;
        a polyol in the amount of from 0.5 to 15%, by weight, based on the weight of said emulsion polymer;
        and optionally a phosphorous-containing species;
        wherein said aqueous composition comprises as the total of all carboxylic acid-containing polymer, as polymerized units, from 0.5 to 9% carboxylic acid monomer by weight, based on the total weight of said carboxylic acid-containing polymer;

    b) contacting a flexible substrate with said curable aqueous composition; and
    c) heating said curable aqueous composition at a temperature of from 120°C to 220°C.

4. The method of claim 3 wherein said polyol is a hydroxylamine selected from the group consisting of diisopropanolamine, 2-(2-aminoethylamino)ethanol, triethanolamine, tris(hydroxymethyl)aminomethane, and diethanolamine.

5. The method of claim 4 wherein said flexible substrate is a woven or nonwoven fabric.

6. A substrate formed by the method of claim 3.

**Patentansprüche**

1. Eine härtbare wässrige Zusammensetzung, die aus Folgendem besteht:

    einem Emulsionspolymer, das als copolymerisierte Einheiten zu 0,5 bis 9 Gew.-% ethylenisch ungesättigtes Dicarbonsäuremonomer beinhaltet, bezogen auf das Gewicht des Emulsionspolymers;
    einem Polyol in der Menge von 0,5 bis 15 Gew.-%, bezogen auf das Gewicht des Emulsionspolymers;
    und optional einer Phosphor enthaltenden Spezies;
    wobei die wässrige Zusammensetzung als die Gesamtheit allen Carbonsäure enthaltenden Polymers als polymerisierte Einheiten zu 0,5 bis 9 Gew.-% Carbonsäuremonomer beinhaltet, bezogen auf das Gesamtgewicht des Carbonsäure enthaltenden Polymers.

2. Härtbare wässrige Zusammensetzung gemäß Anspruch 1, wobei das Polyol ein Hydroxylamin ist, ausgewählt aus der Gruppe, bestehend aus Düsopropanolamin, 2-(2-Aminoethylamino)ethanol, Triethanolamin, Tris(hydroxymethyl)aminomethan und Diethanolamin.

3. Ein Verfahren zum Bilden eines behandelten Substrats, das aus Folgendem besteht:

    a) Bilden einer härtbaren wässrigen Zusammensetzung, die Folgendes beinhaltet:

    ein Emulsionspolymer, das als copolymerisierte Einheiten zu 0,5 bis 9 Gew.-% ethylenisch ungesättigtes Dicarbonsäuremonomer beinhaltet, bezogen auf das Gewicht des Emulsionspolymers;
    ein Polyol in der Menge von 0,5 bis 15 Gew.-%, bezogen auf das Gewicht des Emulsionspolymers;
    und optional eine Phosphor enthaltende Spezies;
    wobei die wässrige Zusammensetzung als die Gesamtheit allen Carbonsäure enthaltenden Polymers als polymerisierte Einheiten zu 0,5 bis 9 Gew.-% Carbonsäuremonomer beinhaltet, bezogen auf das Gesamtgewicht des Carbonsäure enthaltenden Polymers;

    b) In-Kontakt-Bringen eines flexiblen Substrats mit der härtbaren wässrigen Zusammensetzung; und
    c) Erhitzen der härtbaren wässrigen Zusammensetzung bei einer Temperatur von 120 °C bis 220 °C.

4. Verfahren gemäß Anspruch 3, wobei das Polyol ein Hydroxylamin ist, ausgewählt aus der Gruppe, bestehend aus Diisopropanolamin, 2-(2-Aminoethylamino)ethanol, Triethanolamin, Tris(hydroxymethyl)aminomethan und Diethanolamin.

5. Verfahren gemäß Anspruch 4, wobei das flexible Substrat ein Fasergewebe oder Vliesstoff ist.

6. Ein durch das Verfahren gemäß Anspruch 3 gebildetes Substrat.

**Revendications**

1. Une composition aqueuse durcissable consistant en :

    un polymère en émulsion comprenant, en tant qu'unités copolymérisées, de 0,5 à 9 % en poids de monomère acide dicarboxylique éthyléniquement insaturé, rapporté au poids dudit polymère en émulsion ;
    un polyol en une quantité allant de 0,5 à 15 %, en poids, rapporté au poids dudit polymère en émulsion ;
    et éventuellement une espèce contenant du phosphore ;
    ladite composition aqueuse comprenant comme total de tout polymère contenant de l'acide carboxylique, en tant qu'unités polymérisées, de 0,5 à 9 % en poids de monomère acide carboxylique, rapporté au poids total dudit polymère contenant de l'acide carboxylique.

2. La composition aqueuse durcissable de la revendication 1 dans laquelle ledit polyol est une hydroxylamine sélectionnée dans le groupe consistant en la diisopropanolamine, le 2-(2-aminoéthylamino)éthanol, la triéthanolamine, le tris(hydroxyméthyl)aminométhane, et la diéthanolamine.

3. Une méthode pour former un substrat traité consistant en :

a) la formation d'une composition aqueuse durcissable comprenant :

un polymère en émulsion comprenant, en tant qu'unités copolymérisées, de 0,5 à 9 % en poids de monomère acide dicarboxylique éthyléniquement insaturé, rapporté au poids dudit polymère en émulsion ;
un polyol en une quantité allant de 0,5 à 15 %, en poids, rapporté au poids dudit polymère en émulsion ; et éventuellement une espèce contenant du phosphore ;
dans laquelle ladite composition aqueuse comprend comme total de tout polymère contenant de l'acide carboxylique, en tant qu'unités polymérisées, de 0,5 à 9 % en poids de monomère acide carboxylique, rapporté au poids total dudit polymère contenant de l'acide carboxylique ;

b) la mise en contact d'un substrat flexible avec ladite composition aqueuse durcissable ; et
c) le chauffage de ladite composition aqueuse durcissable à une température allant de 120 °C à 220 °C.

4. La méthode de la revendication 3 dans laquelle ledit polyol est une hydroxylamine sélectionnée dans le groupe consistant en la diisopropanolamine, le 2-(2-aminoéthylamino)éthanol, la triéthanolamine, le tris(hydroxyméthyl)aminométhane, et la diéthanolamine.

5. La méthode de la revendication 4 dans laquelle ledit substrat flexible est un tissu tissé ou non tissé.

6. Un substrat formé par la méthode de la revendication 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5451432 A
- WO 2007149644 A
- US 4325856 A
- US 4654397 A
- US 4814373 A
- US 4384056 A
- US 4539361 A

### Non-patent literature cited in the description

- **T.G. FOX.** *Bull. Am. Physics Soc.,* 1956, vol. 1 (3), 123
- Polymer Handbook. Interscience Publishers